# EUROPÄISCHE PATENTSCHRIFT

(11) **EP 1 574 421 B1**
(45) Veröffentlichungstag und Bekanntmachung des Hinweises auf die Patenterteilung: **23.07.2008**
(21) Anmeldenummer: 05101663.2
(22) Anmeldetag: 03.03.2005
(51) Int. Cl.: B62D 15/02, G01D 5/16, G01D 5/14, G01D 5/252

(54) **Lenkwinkelsensor**
Steering Angle Sensor
Capteur d'angle de braquage

(30) Priorität: 08.03.2004 DE 102004011125
(43) Veröffentlichungstag der Anmeldung: 14.09.2005
(73) Patentinhaber: Valeo Schalter und Sensoren GmbH, 74321 Bietigheim-Bissingen (DE)
(72) Erfinder: Fröhlich, Ekkehart, Nordheim, 74226 (DE)
(74) Vertreter: Vötsch, Reiner

(56) Entgegenhaltungen:
- EP-A- 0 836 072
- DE-A1- 4 440 214
- DE-A1- 19 818 799
- US-A- 6 064 197
- US-A1- 2003 090 265

## Beschreibung

Die Erfindung betrifft einen Lenkwinkelsensor zur Bestimmung der Drehwinkelstellung eins Lenkrades und/oder einer Lenksäule.

Aus dem Stand der Technik sind Lenkwinkelsensoren bekannt, die auf einem optischen Prinzip basieren. Ein solcher Lenkwinkelsensor kann einen Rotor mit Codescheiben aufweisen, deren Code durch eine Abtasteinheit abtastbar ist. Üblicherweise ist der Code der Codescheiben durch Zähne unterschiedlicher Breite mit zwischengeschalteten Zahnlücken realisiert. Die Zähne beziehungsweise die Zahnlücken können durch optische Mittel, insbesondere durch Fototransistoren, erfasst werden. Bedingt durch fertigungstechnische Beschränkungen kann mit einem derartigen Code zur Bestimmung der Drehwinkelstellung des Lenkrads lediglich eine Auflösung im Bereich von etwa 1,5 ° erreicht werden.

Nachteilig bei der Verwendung von optischen Mitteln ist außerdem, dass bei langer Betriebsdauer und hohen Umgebungstemperaturen, insbesondere bei Verwendung im Motorraum eines Kraftfahrzeugs, die optischen Mittel Verschleißerscheinungen durch Schmutzeinwirkung und Alterung unterliegen. Weiterhin ist die Herstellung der Codescheiben verhältnismäßig aufwändig.

Zur Verbesserung der Auflösung wird gemäß der DE 101 10 785 A1 vorgeschlagen, ein Zählrad zu verwenden, das von einem Rotor angetrieben wird, der eine Codescheibe aufweist. Die Drehwinkelstellung des Zählrades kann durch zwei voneinander im Winkelabstand von 90 ° zueinander versetzte Magnetfeldsensoren erfolgen und zur Berechnung des absoluten Lenkradwinkels herangezogen werden. Mit dieser Ausführung lässt sich die oben genannte Auflösung verbessern.

Weiterhin ist aus der DE 195 06 938 A1 ein Lenkwinkelsensor bekannt, bei dem ein Rotor mit zwei Drehkörpern gekoppelt ist, deren jeweilige Drehwinkelstellung über Sensoren erfassbar ist. Über die Drehwinkelstellung der vom Rotor angetriebenen Drehkörper kann die Winkelstellung des Rotors mathematisch ermittelt werden. Dabei lassen sich Auflösungen von bis zu 0,1 ° erzielen.

Nachteilig bei der in der DE 195 06 938 A1 vorgeschlagenen Anordnung ist die Tatsache, dass zusätzlich zum Rotor mindestens zwei Drehkörper erforderlich sind. Diese beanspruchen einen verhältnismäßig großen Platz.

Weiterhin sind aus EP-A-0 836 072, US 2003/090265 und US-A-6 064 197 Winkelsensoren bekannt, in welchen mittels Magnetfeldschaltern und Magnetfeldsensoren die Winkellage eines Magneten bestimmt wird.

Hiervon ausgehend liegt der vorliegenden Erfindung die Aufgabe zugrunde, einen Lenkwinkelsensor zu schaffen, der möglichst einfach aufgebaut ist, unempfindlich gegen Umwelteinflüsse ist und dennoch eine hohe Auflösung erzielt.

Diese Aufgabe wird durch einen Lenkwinkelsensor mit einer ersten, mit dem Lenkrad und/oder der Lenksäule bewegungsgekoppelten und mehrere Polpaare aufweisenden Magnetspur und mit einer zweiten, ebenfalls mit dem Lenkrad und/oder der Lenksäule bewegungsgekoppelten und mehrere Polpaare aufweisenden Magnetspur, mit digitalen Magnetfeldschaltern zur Abtastung der ersten Magnetspur, mit linearen Magnetfeldsensoren zur Abtastung der zweiten Magnetspur, und mit einer Auswerteeinheit, die zur Bestimmung der Drehwinkelstellung aus den Ausgangssignalen der Magnetfeldsensoren und der Magnetfeldschalter geeignet ist.

Durch die erfindungsgemäße Ausführung kann auf die Verwendung von optischen Mitteln, insbesondere von Codescheiben oder Fotozellen, verzichtet werden. Der erfindungsgemäße Lenkwinkelsensor ist gegen die im jeweiligen Bauraum auftretenden Verschmutzungen (Schmiermittel) vollkommen unempfindlich. Durch Auswertung der Ausgangssignale der linearen Magnetfeldsensoren und der Ausgangssignale der digitalen Magnetfeldschalter kann der Lenkwinkel innerhalb einer Umdrehung eindeutig bestimmt werden. Die Ausgangssignale der linearen Magnetfeldsensoren können dabei analoge Signale sein. Selbstverständlich ist denkbar, dass die analogen Signale zur weiteren Signalverarbeitung mit Hilfe von Analog/Digital-Wandlern digitalisiert werden. Die Ausgangssignale der digitalen Magnetfeldschalter zeigen lediglich an, welche Polarität ein von ihnen erfasstes Segment der jeweiligen Magnetspur aufweist.

Besonders vorteilhaft ist, wenn die Magnetspuren, die Polpaare der Magnetspuren, die Magnetfeldsensoren und die Magnetfeldschalter dabei derart angeordnet sind, dass aus den Ausgangssignalen der linearen Magnetfeldsensoren ein innerhalb einer Umdrehung des Lenkrades und/oder der Lenksäule mehrdeutiger Winkel w' bestimmbar ist, aus dem unter Berücksichtigung der Ausgangssignale der digitalen Magnetfeldschalter die eindeutige Winkelstellung w innerhalb einer Umdrehung des Lenkrades und/oder der Lenksäule bestimmt werden kann. Über die Abtastung der zweiten Magnetspur mit linearen Magnetfeldsensoren kann folglich ein innerhalb einer Umdrehung mehrdeutiger Winkel w' festgestellt werden. Zur eindeutigen Zuordnung des mehrdeutigen Winkels w' werden die digitalen Ausgangssignale der Magnetfeldschalter herangezogen.

Vorteilhafterweise ist vorgesehen, dass beide Magnetspuren eine unterschiedliche Anzahl von Polpaarungen aufweisen. Hierdurch wird gewährleistet, dass ein gewisser Phasenversatz zwischen den Magnetspuren vorliegt, der vorteilhaft ist, um eindeutig zuordenbare Signale zu erhalten. Die beiden Magnetspuren können dabei von Magnetsegmenten gebildet sein, die insbesondere entlang eines Kreises angeordnet sind. Als geeignete Magnetspuren haben sich insbesondere Magnetringe oder Magnetsegmentscheiben herausgestellt. Die Magnetspuren können dabei auf einem Träger, beispielsweise einem Rotor oder einem Drehkörper, angeordnet sein, oder in diesen integriert sein. Die einzelnen Polpaare umfassen in der Regel zwei Magnetsegmente, die jeweils einen Polwinkel einschließen. Die Magnetspuren sind vorteilhafterweise derart symmetrisch ausgebildet, dass zwei gegenüberliegende Polsegmente jeweils einen gleichen Polwinkel aufweisen, beziehungsweise dass alle Polsegmente jeweils einen gleichen Polwinkel aufweisen.

Erfindungsgemäße Lenkwinkelsensoren können insbesondere vorsehen, dass die erste Magnetspur n Polpaare aufweist und von 1=n-1 digitalen Magnetfeldschaltern abgetastet wird und dass die zweite Magnetspur von wenigstens zwei linearen Magnetfeldsensoren abgetastet wird. Wie bereits erwähnt, kann über die linearen Magnetfeldsensoren ein mehrdeutiger Drehwinkel bestimmt werden. Über die zweite Magnetspur wird durch die Ausgangssignale der Magnetfeldschalter eine eindeutige Zuordnung des zunächst mehrdeutigen Drehwinkels möglich.

Als vorteilhaft hat sich herausgestellt, wenn der Winkelabstand α der 1 digitalen Magnetfeldschalter wie folgt berechnet wird: α=*(1*/*1)∗*χ, wobei χ der Polwinkel eines Polsegments der ersten Magnetspur ist und/oder wenn sich der Winkelabstand β der m linearen Magnetfeldsensoren wie folgt berechnet: β=*(l*/*m)∗*δ, wobei δ der Polwinkel eines Polsegments der zweiten Magnetspur ist. Weist die erste Magnetspur beispielsweise drei Polpaare auf einem Ringmagneten auf, so beträgt der Winkel eines Polsegments 60°. Bei drei Polpaaren sind vorteilhafterweise 3-1=2 Magnetfeldschalter vorgesehen. Der Winkelabstand der beiden Magnetfeldschalter beträgt dann α=*(1*/*2)∗60°*=*30°*. Weist die zweite Codespur beispielsweise lediglich ein Winkelpaar auf, so beträgt der Polwinkel eines Polsegments δ=180°. Sind zwei Magnetfeldsensoren vorgesehen, berechnet sich der Winkelabstand der beiden Magnetfeldsensoren *β=(1*/*2)∗180°*=*90°*.

Eine bevorzugte Ausführungsform der Erfindung kann vorsehen, dass ein mit der Lenksäule oder dem Lenkrad drehkoppelbarer Rotor vorgesehen ist, an dem beide Magnetspuren phasenversetzt angeordnet sind. Die beiden Magnetspuren sind vorteilhafterweise konzentrisch zueinander, jeweils auf einer Kreisbahn angeordnet.

Die beiden Magnetspuren können dabei radial nebeneinander angeordnet sein oder axial hintereinander. Die erste Magnetspur sieht vorteilhafterweise n Polpaare und die zweite Magnetspur vorteilhafterweise k Polpaare auf, wobei n ≠ k beziehungsweise n=k+1 ist. Ein geeigneter Wert ergibt sich dann, wenn die erste Magnetspur n=5 Polpaare mit je einem Polwinkel χ=36° aufweist und die zweite Magnetspur k=4 Polpaare mit einem Polwinkel δ=45° aufweist. Die erste Magnetspur wird dann von vorteilhafterweise l=4 Magnetfeldschaltern abgetastet, die jeweils einen Winkelabstand von α=*(1*/*4)∗36°*=*9°* haben. Die zweite Magnetspur wird vorteilhafterweise von m=2 Magnetfeldsensoren abgetastet, die einen Winkelabstand von *β*=*(1*/*2)∗45°*=*22,5°* haben.

Eine andere Ausführungsform der Erfindung sieht vor, dass ein mit der Lenksäule oder dem Lenkrad drehkoppelbarer Rotor vorgesehen ist, wobei die erste Magnetspur an dem Rotor angeordnet ist und dass mindestens ein mit einer Lenksäule, dem Lenkrad oder dem Rotor drehgekoppelter Drehkörper vorgesehen ist, der bei Drehung des Lenkrades oder der Lenksäule mit einer konstanten und gleichförmigen Übersetzung ü angetrieben ist, wobei die zweite Magnetspur an dem Drehkörper angeordnet ist. Dies hat den Vorteil, dass die beiden Magnetspuren mit unterschiedlichen Geschwindigkeiten bewegt werden, wodurch eine phasenversetzte Abtastung erreicht werden kann. Durch entsprechende Wahl der Übersetzung und Vorsehen von entsprechend vielen Polpaaren für die zweite Magnetspur kann eine entsprechend hohe Auflösung erzielt werden.

Vorteilhafterweise ist hierbei denkbar, dass die zweite Magnetspur k Polpaare aufweist, dass die erste Magnetspur wenigstens *n*=*k∗ü*+*l* Polpaare aufweist, und dass zur Abtastung der ersten Magnetspur wenigstens *l*=*k∗ü* digitale Magnetfeldschalter vorgesehen sind. Dabei ist außerdem vorteilhaft, wenn der Winkelabstand α der einzelnen digitalen Magnetfeldschalter sich wie folgt berechnet: *α*=*360°*/*(2∗n∗k∗ü)*.

Die eingangs genannte Aufgabe wird außerdem gelöst durch ein Verfahren zur Bestimmung der Drehwinkelstellung eines Lenkrades und/oder einer Lenksäule, insbesondere unter Verwendung eines erfindungsgemäßen Lenkwinkelsensors, wobei sich das Verfahren dadurch auszeichnet, dass eine erste mit dem Lenkrad und/oder der Lenksäule bewegungsgekoppelte, mehrere Polpaare aufweisende Magnetspur von digitalen Magnetfeldschaltern abgetastet wird, dass eine zweite mit dem Lenkrad und/oder der Lenksäule bewegungsgekoppelte, mehrere Polpaare aufweisende Magnetspur von linearen Magnetfeldsensoren abgetastet wird, und dass aus den Ausgangssignalen der Magnetfeldschalter und der Magnetfeldsensoren die Drehwinkelstellung bestimmt wird.

Besonders vorteilhaft ist, wenn aus den Ausgangssignalen der linearen Magnetfeldsensoren eine innerhalb einer Umdrehung des Lenkrades und/oder der Lenksäule mehrdeutiger Winkel w' bestimmt wird, aus dem unter Berücksichtigung der Ausgangssignale der digitalen Magnetfeldschalter die eindeutige Drehwinkelstellung w innerhalb einer Umdrehung des Lenkrades und/oder der Lenksäule bestimmt wird. Die Ausgangssignale der Magnetfeldschalter können dabei Stellen einer Binärzahl bilden, aus der eine eindeutige Bestimmung des mehrdeutigen Winkels ermöglicht wird.

Vorteilhafterweise ist das Verfahren derart ausgebildet, dass die Ausgangssignale der Magnetfeldsensoren kosinus- und sinusförmig sind und dass die Ausgangssignale der Magnetfeldschalter digitale Signale, insbesondere Rechtecksignale, sind. Aus den kosinus- sinusförmigen Signalen kann mit bekannten Algorithmen, beispielsweise mit dem Cordic-Algorithmus, auf einen jeweiligen, mehrdeutigen Winkel rückgeschlossen werden. Durch die zusätzliche Information der Ausgangssignale der Magnetfeldschalter kann die Drehwinkelstellung dann eindeutig bestimmt werden.

Weitere Einzelheiten und Ausgestaltungen der Erfindung sind der folgenden Beschreibung zu entnehmen, in die Erfindung anhand der in der Zeichnung dargestellten Ausführungsbeispiele näher beschrieben und erläutert ist.

Es zeigen:
- Figur 1: eine schematische Darstellung eines ersten erfindungsgemäßen Lenkwinkelsensors;
- Figur 2: den Signalverlauf der Ausgangssignale der Magnetschalter und Magnetfeldsensoren des Lenkwinkelsensors gemäß Figur 1;
- Figur 3: eine schematische Darstellung eines zweiten erfindungsgemäßen Lenkwinkelsensors; und

- Figur 4: den Signalverlauf der Ausgangssignale der Magnetschalter und Magnetfeldsensoren des Lenkwinkelsensors gemäß Figur 3.

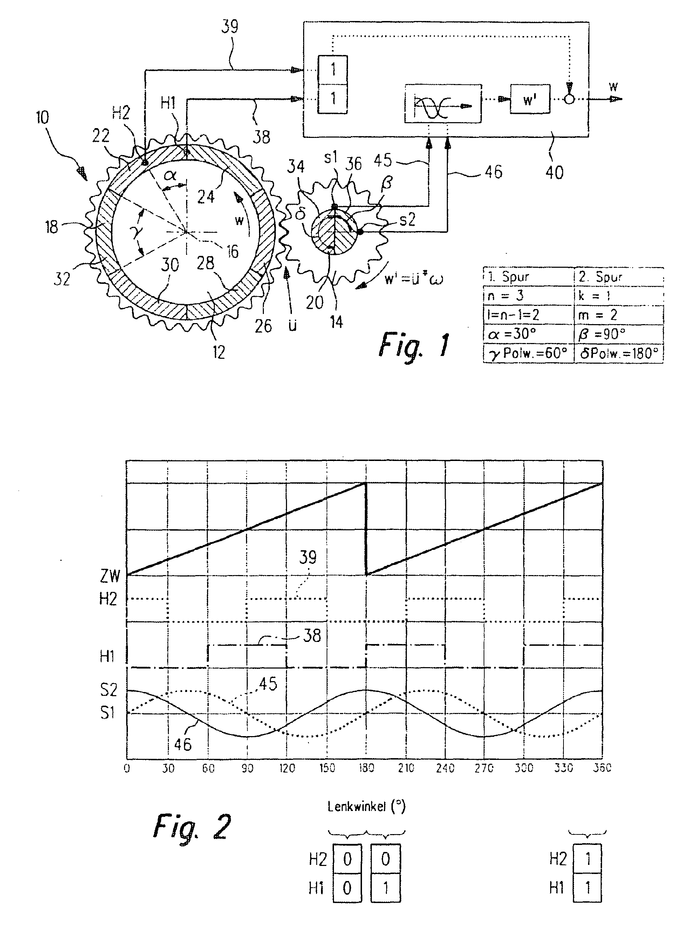

In der Figur 1 ist ein erfindungsgemäßer Lenkwinkelsensor 10 dargestellt, der einen mit einer Lenksäule drehgekoppelten Rotor 12 aufweist sowie einen Drehkörper 14, der von dem Rotor 12 mit einer konstanten und gleichförmigen Übersetzung ü angetrieben wird. Die Drehachse 16 des Rotors 12 kann dabei der Drehachse der nicht dargestellten Lenksäule und/oder der Drehachse eines nicht dargestellten Lenkrades entsprechen.

Der Lenkwinkelsensor 10 sieht insgesamt zwei Magnetspuren 18, 20 vor, wobei die erste Magnetspur 18 an dem Rotor 12 und die zweite Magnetspur 20 an dem Drehkörper 14 angeordnet ist. Die erste Magnetspur 18 ist als Magnetring ausgebildet, der aus einzelnen Polsegmenten 22, 24, 26, 28, 30, 32 besteht. Jeweils zwei gegenüberliegende oder nebeneinander angeordnete Polsegmente bilden hierbei ein Polpaar. Insgesamt sieht die Magnetspur drei Polpaare vor, wobei jedes Polsegment einen Polwinkel χ=60° einschließt. Da jedes Polpaar aus einem Nordpolsegment und einem Südpolsegment besteht, sind insgesamt drei Nordpolsegmente und drei Südpolsegmente vorhanden.

Die zweite Magnetspur 20 sieht lediglich ein Polpaar vor, das aus zwei halbkreisförmig ausgebildeten Polsegmenten 34, 36 besteht; jeweils mit einem Polwinkel von χ=180°. Bei dem Polsegment 36 handelt es sich um einen Nordpol; das Polsegment 34 ist ein Südpol.

Die erste Codespur 18 wird von insgesamt zwei digitalen Magnetfeldschaltern H1 und H2 abgetastet. Die Magnetfeldschalter können beispielsweise als digitale Hallsensoren oder digitale magnetoresistive Sensoren ausgebildet sein. Die digitalen Ausgangssignale 38, 39 der Magnetfeldschalter H1 und H2 werden einer Auswerteeinheit 40 zugeführt. Da sich in der Figur 1 dargestellten Drehstellung des Rotors 12 beide Magnetfeldschalter H1 und H2 im Bereich eines Nordpols, nämlich des Polsegments 22, befinden, weisen beide Ausgangssignale 38, 39 in dieser Position des Rotors 12 den Wert 1 auf. Die Ausgangssignale der Schalter H1 und H2 können als binäres Codewort 1,1 dargestellt werden.

Zur Abtastung der zweiten Magnetspur sind zwei lineare Magnetfeldsensoren S1 und S2 vorgesehen. Die linearen Ausgangssignale 45, 46 werden der Auswerteeinheit 40 zugeführt.

Der Winkelabstand α der beiden Magnetschalter H1 und H2 beträgt α=30°. Der Wert berechnet sich wie folgt:
α=*(1*/*l)**χ, wobei l die Anzahl der Magnetfeldschalter, also l=2, ist und χ der Polwinkel eines Polsegments, also χ=60°, ist.

Der Winkelabstand β der beiden Magnetfeldschalter S1 und S2 beträgt: β=90°. Der Wert β berechnet sich wie folgt:
β=*(1*/*m)∗*δ, wobei m die Anzahl der linearen Magnetfeldsensoren ist, also m=2, und δ der Polwinkel eines Polsegments der zweiten Magnetspur, also δ=180°.

Die Anzahl n der Polpaare der ersten Magnetspur berechnet sich wie folgt: *n*=*k∗ü*+*1*, wobei k die Anzahl der Polpaare der zweiten Polspur ist und ü die Übersetzung zwischen dem Rotor 12 und dem Drehkörper 14. Mit den Werten gemäß Figur 1 ergibt sich
k=1, ü=2, daraus folgt: n=3. Die Anzahl l der digitalen Magnetfeldschalter berechnet sich wie folgt:
*l*=*k∗ü*, also l = 2. Der Winkelabstand α der einzelnen Magnetfeldschalter H1, H2 berechnet sich wie folgt:
α =*360°*/*(2∗n∗k∗ü)*, also α = 30°.

Die Signalauswertung veranschaulicht Figur 2. In Figur 2 ist der Lenkwinkel w von 0° bis 360° aufgetragen. Dargestellt sind die Ausgangssignale 45, 46 der beiden Sensoren S1 und S2 sowie die Ausgangssignale 38, 39 der beiden Schalter H1 und H2. Die Ausgangssignale 45, 46 sind sinus- und kosinusförmig. Die Ausgangssignale 38, 39 sind digitale Rechtecksignale. In der Figur 2 ist außerdem der Drehwinkel ZW des Drehkörpers 14 dargestellt.

Aufgrund des gewählten Ubersetzungsverhältnisses ü zwischen Rotor 12 und Drehkörper 14 dreht sich der Drehkörper 14 bei einer Umdrehung des Rotors 12 mehrfach. In der Figur 1 ist das Übersetzungsverhältnis ü derart gewählt, dass bei einer Umdrehung des Rotors 12 sich der Drehkörper 14 zweimal dreht; das heißt ü = 2. Dies wird auch aus Figur 2 deutlich, da über eine volle Umdrehung des Lenkrades, das heißt w = 0° bis 360°, sich die Signale 45, 46 in den Intervallen von 0° bis 180° und von 180° bis 360° wiederholen.

Aus den Ausgangssignalen 45, 46 kann die Auswerteeinheit über bekannte Algorithmen-Verfahren einen mehrdeutigen Winkel w' bestimmen. Da sich die Ausgangssignale 45, 46 in einer Umdrehung des Lenkrades einmal wiederholen, ist der Winkel w' zweideutig.

Bei der in der Figur 1 gezeigten Drehstellung des Drehkörpers 14 weist der Sensor S2 einen maximalen Wert, also S2=1, auf, wobei der Sensor S1 sich im Übergang zwischen den beiden Polsegmenten 34, 36 befindet; das heißt der Wert S1 = 0. Betrachtet man nun die Ausgangssignale 45, 46 in Figur 2, so lässt sich aus 46 = 1 und 45 = 0 ein Winkel w' von 180° oder 360° ableiten. Zur eindeutigen Zuordnung des Winkels w' werden in einem nächsten Auswertungsschritt die Ausgangssignale 38, 39 der Magnetfeldschalter H1 und H2 herangezogen.

Wie bereits erwähnt, betragen die Werte der Signale 38, 39 in der Figur 1 dargestellten Position jeweils 1; das zugehörige Codewort lautet: 1, 1.

In Figur 2 wird deutlich, dass die erste Möglichkeit des mehrdeutigen Lenkwinkels w' = 180° die Werte 38 = 1 und 39 = 0 zugeordnet ist; das zugehörige Codewort heißt folglich 1, 0. Dem Lenkwinkel w' = 360° sind zugeordnet 38 = 1 und 39 = 1, also 1, 1. Aus den Signalen 38, 39 wird folglich eine eindeutige Zuordnung des Winkels w' ermöglicht: Der Lenkwinkel w beträgt mit H1, H2 = 1, 1: w = 360°.

In der Auswerteeinheit 40 wird folglich aus den Ausgangssignalen der linearen Magnetfeldsensoren S1 und S2 ein innerhalb einer Umdrehung des Lenkrades mehrdeutiger Winkel w' bestimmt, aus dem unter Berücksichtigung der Ausgangssignale 38, 39 der digitalen Magnetfeldschalter H1, H2 die eindeutige Drehwinkelstellung w bestimmt wird.

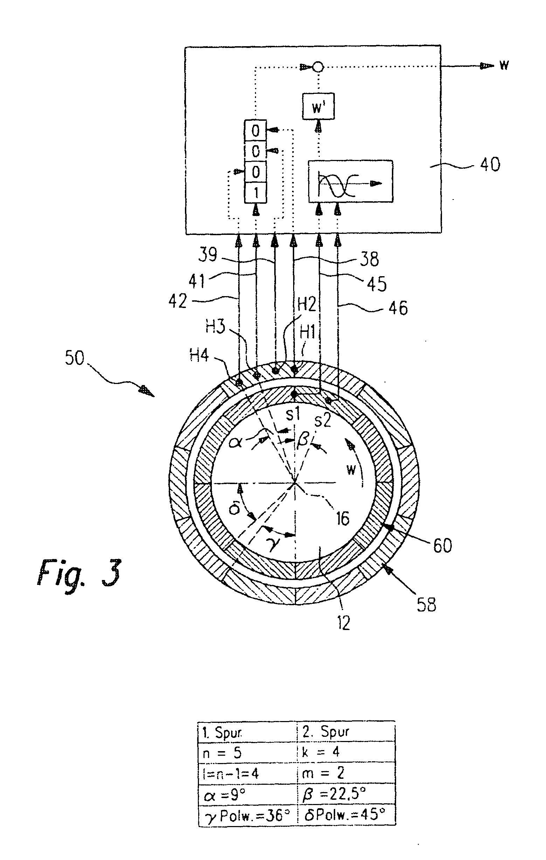

In der Figur 3 ist ein zweiter erfindungsgemäßer Lenkwinkelsensor 50 schematisch dargestellt. Der Lenkwinkelsensor 15 weist ebenfalls einen Rotor 12 auf, der mit der Lenksäule oder dem nicht dargestellten Lenkrad drehgekoppelt ist. Die Drehachse 16 des Rotors 12 kann hierbei identisch mit der Achse der Lenksäule oder der Achse des Lenkrades sein. Auf dem Rotor 12 sind zwei Magnetspuren 58 und 60 angeordnet. Die beiden Magnetspuren 58 und 60 sind radial nebeneinander, konzentrisch um die Drehachse 16 angeordnet.

Beide Codespuren sind als Magnetringe ausgebildet, die jeweils gegenüberliegende Polpaare aufweisen. Die erste, außen liegende Magnetspur 58 sieht insgesamt n=5 Polpaare mit insgesamt zehn Polsegmenten vor. Die zweite, innenliegende Magnetspur 60 umfasst k=n-1=4 Polpaarungen mit insgesamt acht Polsegmenten. Die Anzahl der Polpaare der beiden Magnetspuren 58, 60 ist unterschiedlich; hierdurch ergibt sich eine Phasenversetzung der jeweiligen Polsegmente der beiden Polspuren 58, 60.

Anstelle einer radialen Anordnung der beiden Magnetspuren 58, 60 ist erfindungsgemäß ebenfalls denkbar, dass die Magnetspuren axial hintereinander und gegebenenfalls zusätzlich radial versetzt angeordnet sind.

Zur Abtastung der ersten Magnetspur sind insgesamt vier Magnetfeldschalter H1, H2, H3. H4 vorgesehen. Die Anzahl 1 der Magnetfeldschalter berechnet sich wie folgt: *l*=*n-1*, mit n = Anzahl der Polpaare, also *l*=*5-1*=*4*. Der Winkelabstand α der einzelnen Magnetfeldschalter berechnet sich wie folgt:
α=*(1*/*1)∗*χ, wobei χ der Polwinkel eines Polsegments der ersten Magnetspur 58 ist. Mit χ=36° ergibt sich ein Winkelabstand α=*(1*/*4)∗36°=9°*.

Die zweite Codespur 60 wird von insgesamt zwei linearen Magnetfeldsensoren S1 und S2 abgetastet. Der Winkelabstand β der beiden Magnetfeldsensoren S1 und S2 berechnet sich wie folgt: β=*(1*/*m)∗*δ, wobei m die Anzahl der Magnetfeldsensoren und δ der Polwinkel eines Polsegments der zweiten Magnetspur 60 ist. Mit m=2 und δ=45° ergibt sich: β=22,5°.

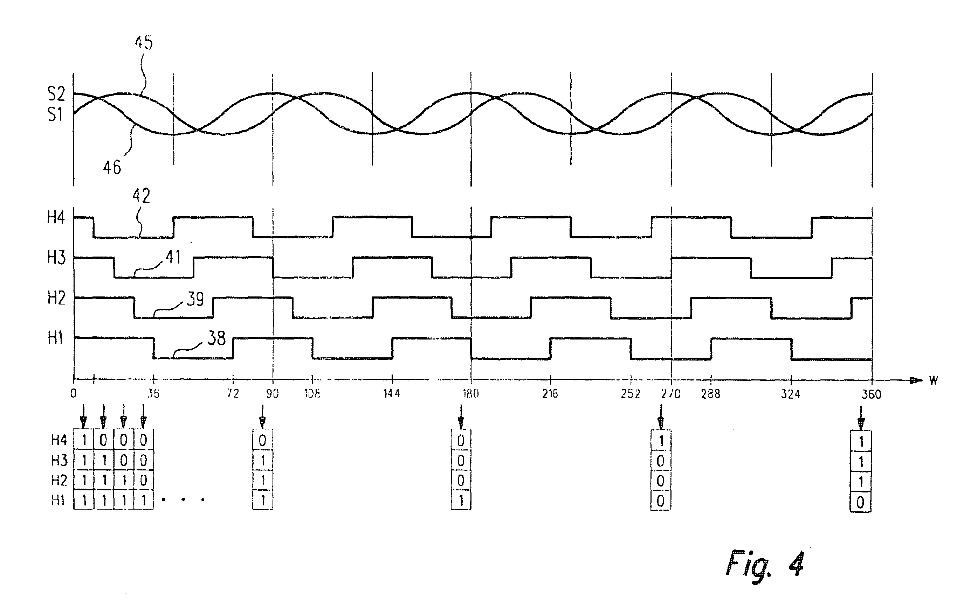

Die Figur 4 zeigt die Auswertung der Signale 45, 46 der beiden linearen Magnetfeldsensoren S1 und S2 sowie der Signale 38, 39, 41, 42 und der Magnetfeldschalter H1, H2, H3, H4.

Wie aus der Figur 4 deutlich wird, wiederholen sich die Signale 45, 46 alle 90°. Ein aus den sinus- und kosinusförmigen Signalen 45, 46 bestimmter Winkel w' ist folglich innerhalb einer vollen Umdrehung des Lenkrades vierdeutig. Mit bekannten Algorithmen kann folglich in der Auswerteeinheit aus den Signalen 45, 46 der vierdeutige Winkel w' bestimmt werden. Über die digitalen Signale der Magnetfeldschalter H1, H2, H3, H4 kann aus dem mehrdeutigen Winkel w' der eindeutige Lenkwinkel w bestimmt werden. Die einzelnen digitalen Ausgangssignale 38, 39, 41, 42, können als binäres Codewort interpretiert werden. In der Figur 4 sind unterhalb der w-Achse verschiedene Codewörter dargestellt, die verschiedenen Winkelsegmenten zuzuordnen sind. Aufgrund des Winkelabstands α=9° wechselt alle 9° das jeweilige Codewort.

Aus einem vierdeutiger Winkel w', der aufgrund der Auswertung der Signale 45, 46 beispielsweise die verschiedenen Werte 85°, 175°, 265° oder 355° aufweisen kann, kann unter Heranziehung des jeweils erfassten Codewortes der tatsächliche Winkel w eindeutig bestimmt werden. Besitzt das zugehörige Codewort die Werte H1 bis H4: 1, 1, 1, 0, so beträgt der Drehwinkel w = 85°. Bei einem Codewort 1, 0, 0, 0 ist w = 175°, bei einem Codewort 0, 0, 0, 1 ist w = 265° und bei einem Codewort 0, 1, 1, 1 ist w = 355°. Mit Hilfe der Ausgangssignale der Magnetfeldschalter H1, H2, H3, H4, beziehungsweise eines jeweils zugehörigen Codeworts, kann folglich auf den eindeutigen Drehwinkel w rückgeschlossen werden.

Aus den angegebenen Formeln lassen sich auch noch andere Kombinationen der Polzahlen n und k oder andere Übersetzungsverhältnisse ü ableiten als in den beschriebenen Ausführungsformen.

Sämtliche in der Beschreibung, den nachfolgenden Ansprüchen und in der Zeichnung dargestellten Merkmale können sowohl einzeln, als auch in beliebiger Kombination miteinander erfindungswesentlich sein.

## Patentansprüche

1. Lenkwinkelsensor (10, 50) zur Bestimmung der Drehwinkelstellung (w) eines Lenkrades und/oder einer Lenksäule, mit einer ersten, mit dem Lenkrad und/oder der Lenksäule bewegungsgekoppelten und n Polpaare aufweisenden Magnetspur (18, 58) und mit einer zweiten, mit dem Lenkrad und/oder der Lenksäule bewegungsgekoppelten und k Polpaare aufweisenden Magnetspur (20, 60), mit digitalen Magnetfeldschaltern (H1, H2, ...) zur Abtastung der ersten Magnetspur (18, 58), mit linearen Magnetfeldsensoren (S1, S2) zur Abtastung der zweiten Magnetspur (20, 60), und mit einer Auswerteeinheit (40), die zur Bestimmung der Drehwinkelstellung (w) aus den Ausgangssignalen (38, 39, 41, 42, 45, 46) der Magnetfeldsensoren (S1, S2) und der Magnetfeldschalter (H1, H2, ...) geeignet ist.

2. Lenkwinkelsensor (10, 50) nach Anspruch 1, **dadurch gekennzeichnet, dass** aus den Ausgangssignalen (45, 46) der linearen Magnetfeldsensoren (S1, S2) ein innerhalb einer Umdrehung des Lenkrades und/oder der Lenksäule mehrdeutiger Winkel (w') bestimmbar ist, aus dem unter Berücksichtigung der Ausgangssignale (38, 39, 41, 42) der digitalen Magnetfeldschalter (H1, H2, H3, H4) die eindeutige Drehwinkelstellung (w) innerhalb einer Umdrehung des Lenkrades und/oder der Lenksäule bestimmt werden kann.

3. Lenkwinkelsensor (10, 50) nach Anspruch 1 oder 2, **dadurch gekennzeichnet, dass** die erste Magnetspur (18, 58) n Polpaare aufweist und von 1 = *n-1* digitalen Magnetfeldschaltern (H1, H2, H3, H4) abgetastet wird und dass die zweite Magnetspur von wenigstens zwei linearen Magnetfeldsensoren (S1, S2) abgetastet wird.

4. Lenkwinkelsensor (10, 50) nach einem der vorhergehenden Ansprüche, **dadurch gekennzeichnet, dass** sich der Winkelabstand α der *l* digitalen Magnetfeldschalter (H1, H2, H3, H4) wie folgt berechnet: α=(1/l)∗χ, wobei χ der Polwinkel eines Polsegments der ersten Magnetspur ist und/oder dass sich der Winkelabstand β der *m* linearen Magnetfeldsensoren (S1, S2) wie folgt berechnet: β = (1/m) ∗ δ, wobei δ der Polwinkel eines Polsegments der zweiten Magnetspur ist.

5. Lenkwinkelsensor (50) nach einem der vorhergehenden Ansprüche, **dadurch gekennzeichnet, dass** ein mit der Lenksäule oder dem Lenkrad drehkoppelbarer Rotor (12) vorgesehen ist, an dem beide Magnetspuren (20, 60) angeordnet sind.

6. Lenkwinkelsensor (50) nach Anspruch 5, **dadurch gekennzeichnet, dass** die beiden Magnetspuren (20, 60) radial oder axial nebeneinander angeordnet sind, wobei die erste Magnetspur (20) n Polpaare und die zweite Magnetspur(60) k Polpaare aufweist.

7. Lenkwinkelsensor (10) nach einem der Ansprüche 1 bis 4, **dadurch gekennzeichnet, dass** ein mit der Lenksäule oder dem Lenkrad drehkoppelbarer Rotor (12) vorgesehen ist, wobei die erste Magnetspur (18) an dem Rotor (12) angeordnet ist und dass mindestens ein mit der Lenksäule, dem Lenkrad oder dem Rotor (12) drehgekoppelter Drehkörper (14) vorgesehen ist, der bei Drehung des Lenkrads oder der Lenksäule mit einer konstanten und gleichförmigen Übersetzung *ü* angetrieben ist, wobei die zweite Magnetspur (58) an dem Drehkörper (14) angeordnet ist.

8. Lenkwinkelsensor (10) nach Anspruch 7, **dadurch gekennzeichnet, dass** die zweite Magnetspur (58) k Polpaare aufweist, dass die erste Magnetspur wenigstens *n*=*k*∗*ü*+1 Polpaare aufweist, und dass zur Abtastung der ersten Magnetspur (18) wenigstens *l*=*k∗ü* digitale Magnetfeldschalter (H1, H2) vorgesehen sind.

9. Lenkwinkelsensor (10) nach Anspruch 8, **dadurch gekennzeichnet, dass** der Winkelabstand α der einzelnen digitalen Magnetfeldschalter (H1, H2) sich wie folgt berechnet: α = 360°/(2∗*n∗k*∗*ü*).

10. Verfahren zur Bestimmung der Drehwinkelstellung (w) eines Lenkrades und/oder einer Lenksäule, insbesondere unter Verwendung eines Lenkwinkelsensors (10, 50) nach einem der vorhergehenden Ansprüche, **dadurch gekennzeichnet,**
- **dass** eine erste mit dem Lenkrad und/oder der Lenksäule bewegungsgekoppelte, mehrere Polpaare aufweisende Magnetspur (18, 58) von digitalen Magnetfeldschaltern (H1, H2, H3, H4) abgetastet wird,
- **dass** eine zweite mit dem Lenkrad und/oder der Lenksäule bewegungsgekoppelte, mehrere Polpaare aufweisende Magnetspur (20, 60) von linearen Magnetfeldsensoren (S1, S2) abgetastet wird,
- und **dass** aus den Ausgangssignalen (38, 39, 41, 42, 45, 46) der Magnetfeldschalter (H1, H2, H3, H4) und Magnetfeldsensoren (S1, S2) die Drehwinkelstellung (w) bestimmt wird.

11. Verfahren nach Anspruch 10, **dadurch gekennzeichnet, dass** aus den Ausgangssignalen (45, 46) der linearen Magnetfeldsensoren (S1, S2) ein innerhalb einer Umdrehung des Lenkrades und/oder der Lenksäule mehrdeutiger Winkel (w') bestimmt wird, aus dem unter Berücksichtigung der Ausgangssignale (38, 39, 41, 42) der digitalen Magnetfeldschalter (H1, H2, H3, H4) die eindeutige Drehwinkelstellung (w) innerhalb einer Umdrehung des Lenkrades und/oder der Lenksäule bestimmt wird.

12. Verfahren nach Anspruch 11 oder 12, **dadurch gekennzeichnet** die Ausgangssignale (45, 46) der Magnetfeldsensoren (S1, S2) kosinus- und sinusförmig sind und dass die Ausgangssignale (38, 39, 41, 42) der Magnetfeldschalter (H1, H2, H3, H4) digitale Signale sind.

## Claims

1. Steering angle sensor (10, 50) for determining the rotational angle position (w) of a steering wheel and/or of a steering column, with a first magnetic track (18, 58) which is motionally coupled to the steering wheel and/or the steering column and which has n pairs of poles, and with a second magnetic track (20, 60) which is motionally coupled to the steering wheel and/or the steering column and which has k pairs of poles, with digital magnetic field switches (H1, H2, ...) for scanning the first magnetic track (18, 58), with linear magnetic field sensors (S1, S2) for scanning the second magnetic track (20, 60), and with an evaluation unit (40) which is suitable for determining the rotational angle position (w) from the output signals (38, 39, 41, 42, 45, 46) of the magnetic field sensors (S1, S2) and the magnetic field switches (H1, H2, ...).

2. Steering angle sensor (10, 50) according to claim 1, **characterised in that** from the output signals (45, 46) of the linear magnetic field sensors (S1, S2) it is possible to determine a many-valued angle (w') within a revolution of the steering wheel and/or of the steering column, from which [angle] it is possible, taking into account the output signals (38, 39, 41, 42) of the digital magnetic field switches (H1, H2, H3, H4), to determine the specific rotational angle position (w) within a revolution of the steering wheel and/or of the steering column.

3. Steering angle sensor (10, 50) according to claim 1 or 2, **characterised in that** the first magnetic track (18, 58) has *n* pairs of poles and is scanned by 1 = *n*-*1* digital magnetic field switches (H1, H2, H3, H4), and that the second magnetic track is scanned by at least two linear magnetic field sensors (S1, S2).

4. Steering angle sensor (10, 50) according to one of the preceding claims, **characterised in that** the angle distance α of the *l* digital magnetic field switches (H1, H2, H3, H4) is calculated as follows: α =(1/1) × χ, where χ is the pole angle of a pole segment of the first magnetic track and/or that the angle distance β of the *m* linear magnetic field sensors (S1, S2) is calculated as follows: β = (1/m) × δ, where δ is the pole angle of a pole segment of the second magnetic track.

5. Steering angle sensor (50) according to one of the preceding claims, **characterised in that** there is provided a rotor (12) which can be rotationally coupled to the steering column or the steering wheel, and on which both magnetic tracks (20, 60) are arranged.

6. Steering angle sensor (50) according to claim 5, **characterised in that** the two magnetic tracks (20, 60) are arranged radially or axially next to one another, with the first magnetic track (20) having n pairs of poles and the second magnetic track (60) having k pairs of poles.

7. Steering angle sensor (10) according to one of the claims 1 to 4, **characterised in that** there is provided a rotor (12) which can be rotationally coupled to the steering column or the steering wheel, wherein the first magnetic track (18) is arranged on the rotor (12) and that at least one rotational body (14) is provided which is rotationally coupled to the steering column, the steering wheel or the rotor (12), and which when the steering wheel or steering column is rotated, is driven with a constant and uniform transmission ratio *ü,* wherein the second magnetic track (58) is arranged on the rotational body (14).

8. Steering angle sensor (10) according to claim 7, **characterised in that** the second magnetic track (58) has *k* pairs of poles, that the first magnetic track has at least *n=k*×*ü+*1 pairs of poles, and that for scanning the first magnetic track (18) at least *l=k*×*ü* digital magnetic field switches (H1, H2) are provided.

9. Steering angle sensor (10) according to claim 8, **characterised in that** the angle distance α of the individual digital magnetic field switches (H1, H2) is calculated as follows: α =360° / (2×*n*×*k*×*ü).*

10. Method for determining the rotational angle position (w) of a steering wheel and/or of a steering column, in particular using a steering angle sensor (10, 50) according to one of the preceding claims, **characterised in that**
- a first magnetic track (18, 58) which is motionally coupled to the steering wheel and/or steering column, and which has several pairs of poles, is scanned by digital magnetic field switches (H1, H2, H3, H4),
- a second magnetic track (20, 60) which is motionally coupled to the steering wheel and/or steering column, and which has several pairs of poles, is scanned by linear magnetic field sensors (S1, S2),
- and that from the output signals (38, 39, 41, 42, 45, 46) of the magnetic field switches (H1, H2, H3, H4) and magnetic field sensors (S1, S2), the rotational angle position (w) is determined.

11. Method according to claim 10, **characterised in that** from the output signals (45, 46) of the linear magnetic field sensors (S1, S2), a many-valued angle (w') within a revolution of the steering wheel and/or of the steering column is determined, from which, taking into account the output signals (38, 39, 41, 42) of the digital magnetic field switches (H1, H2, H3, H4), the specific rotational angle position (w) within a revolution of the steering wheel and/or steering column is determined.

12. Method according to claim 11 or 12, **characterised in that** the output signals (45, 46) of the magnetic field sensors (S1, S2) are cosinusoidal and sinusoidal, and that the output signals (38, 39, 41, 42) of the magnetic field switches (H1, H2, H3, H4) are digital signals.

## Revendications

1. Détecteur (10, 50) d'angle de braquage qui détermine la position de l'angle de braquage (w) d'un volant et/ou d'une colonne de direction et qui présente une première piste magnétique (18, 58) dotée de n paires de pôles et accouplée à déplacement au volant et/ou à la colonne de direction et une deuxième piste magnétique (20, 60) dotée de k paires de pôles et accouplée à déplacement au volant et/ou à la colonne de direction, des commutateurs numériques (H1, H2, ...) de champ magnétique qui surveillent la première piste magnétique (18, 58), des détecteurs linéaires (S1, S2) de champ magnétique qui surveillent la deuxième piste magnétique (20, 60) et une unité d'évaluation (40) qui convient pour déterminer la position (w) de l'angle de braquage à partir des signaux de sortie (38, 39, 41, 42, 45, 46) des détecteurs (S1, S2) de champ magnétique et des commutateurs (H1, H2, ...) de champ magnétique.

2. Détecteur (10, 50) d'angle de braquage selon la revendication 1, **caractérisé en ce qu'**à partir des signaux de sortie (45, 46) des détecteurs linéaires (S1, S2) de champ magnétique, un angle (w') à partir duquel, en tenant compte des signaux de sortie (38, 39, 41, 42) des commutateurs numériques (H1, H2, H3, H4) de champ magnétique, la position non ambiguë de l'angle de braquage (w) à l'intérieur d'un tour du volant et/ou de la colonne de direction peut être déterminée à l'intérieur d'un tour du volant et/ou de la colonne de direction.

3. Détecteur (10, 50) d'angle de braquage selon les revendications 1 ou 2, **caractérisé en ce que** la première piste magnétique (18, 58) présente n paires de pôles et est surveillée par 1 = n - 1 commutateurs numériques (H1, H2, H3, H4) de champ magnétique et **en ce que** la deuxième piste magnétique est surveillée par au moins deux détecteurs linéaires (S1, S2) de champ magnétique.

4. Détecteur (10, 50) d'angle de braquage selon l'une des revendications précédentes, **caractérisé en ce que** l'écart angulaire α entre les l commutateurs numériques (H1, H2, H3, H4) de champ magnétique est calculé de la façon suivante: α = (1/l) * χ, χ représentant l'angle polaire d'un segment polaire de la première piste magnétique et/ou **en ce que** l'écart angulaire P entre les m détecteurs linéaires (S1, S2) de champ magnétique est calculé de la façon suivante: β = (1/m) * δ, δ représentant l'angle polaire d'un segment polaire de la deuxième piste magnétique.

5. Détecteur (50) d'angle de braquage selon l'une des revendications précédentes, **caractérisé en ce qu'**il présente un rotor (12) qui peut être accouplé en rotation à la colonne de direction ou au volant et sur lequel les deux pistes magnétiques (20, 60) sont disposées.

6. Détecteur (50) d'angle de braquage selon la revendication 5, **caractérisé en ce que** les deux pistes magnétiques (20, 60) sont disposées radialement ou axialement l'une derrière l'autre, la première piste magnétique (20) présentant n paires de pôles et la deuxième piste magnétique (60) k paires de pôle.

7. Détecteur (10) d'angle de braquage selon l'une des revendications 1 à 4, **caractérisé en ce qu'**il présente un rotor (12) qui peut être accouplé en rotation à la colonne de direction ou au volant, la première piste magnétique (18) étant disposée sur le rotor (12), et **en ce qu'**il présente au moins un corps rotatif (14) accouplé en rotation à la colonne de direction, au volant ou au rotor (12) et entraîné à un taux de conversion ü constant lors de la rotation du volant ou de la colonne de direction, la deuxième piste magnétique (58) étant disposée sur le corps rotatif (14).

8. Détecteur (10) d'angle de braquage selon la revendication 7, **caractérisé en ce que** la deuxième piste magnétique (58) présente k paires de pôles, **en ce que** la première piste magnétique présente au moins n = k * ü + 1 paires de pôles et **en ce qu'**au moins l = k * ü commutateurs numériques (H1, H2) de champ magnétique sont prévus pour surveiller la première piste magnétique (18).

9. Détecteur (10) d'angle de braquage selon la revendication 8, **caractérisé en ce que** l'écart angulaire α entre les différents commutateurs numériques (H1, H2) de champ magnétique se calcule de la façon suivante: α = 360°/(2 * n * k * ü).

10. Procédé de détermination de la position (w) de l'angle de braquage d'un volant et/ou d'une colonne de direction, en particulier par recours à un détecteur (10, 50) d'angle de braquage selon l'une des revendications précédentes, **caractérisé en ce que**
- une première piste magnétique (18, 58) qui présente plusieurs paires de pôles et couplée à déplacement du volant et/ou de la colonne de direction est surveillée par des commutateurs numériques (H1, H2, H3, H4) de champ magnétique,
- **en ce qu'**une deuxième piste magnétique (20, 60) qui présente plusieurs paires de pôles et couplée à déplacement au volant et/ou à la colonne de direction est surveillée par des détecteurs linéaires (S1, S2) de champ magnétique et
- **en ce que** la position (w) de l'angle de braquage est définie à partir des signaux de sortie (38, 39, 41, 42, 45, 46) des commutateurs (H1, H2, H3, H4) de champ magnétique et des détecteurs (S1, S2) de champ magnétique.

11. Procédé selon la revendication 10, **caractérisé en ce qu'**à partir des signaux des sortie (45, 46) des détecteurs linéaires (S1, S2) de champ magnétique, un angle (w') à partir duquel, en tenant compte des signaux de sortie (38, 39, 41, 42) des commutateurs numériques (H1, H2, H3, H4) de champ magnétique, la position non ambiguë de l'angle de braquage (w) à l'intérieur d'un tour du volant et/ou de la colonne de direction peut être déterminée à l'intérieur d'un tour du volant et/ou de la colonne de direction.

12. Procédé selon les revendications 11 ou 12, **caractérisé en ce que** les signaux des sortie (45, 46) des détecteurs (S1, S2) de champ magnétique sont de forme cosinusoïdale ou sinusoïdale et **en ce que** les signaux de sortie (38, 39, 41, 42) des commutateurs (H1, H2, H3, H4) de champ magnétique sont des signaux numériques.
